# EUROPÄISCHE PATENTSCHRIFT

(11) **EP 2 143 910 B1**
(45) Veröffentlichungstag und Bekanntmachung des Hinweises auf die Patenterteilung: **21.03.2012**
(21) Anmeldenummer: 09163190.3
(22) Anmeldetag: 19.06.2009
(51) Int. Cl.: F02C 6/12, F16F 1/32

(54) **Abgasturbolader für ein Kraftfahrzeug**
Exhaust gas turbocharger for a motor vehicle
Turbocompresseur de gaz d'échappement pour un véhicule automobile

(30) Priorität: 11.07.2008 DE 102008032808
(43) Veröffentlichungstag der Anmeldung: 13.01.2010
(73) Patentinhaber: Bosch Mahle Turbo Systems GmbH & Co. KG, 70376 Stuttgart (DE)
(72) Erfinder: Dilovski, Nikolay, 73760 Ostfildern (DE); Wein, Michael, 70376 Stuttgart (DE)
(74) Vertreter: BRP Renaud & Partner

(56) Entgegenhaltungen:
- EP-A- 1 672 177
- WO-A-2007/104535
- DE-U1-202005 009 491

## Beschreibung

Die vorliegende Erfindung betrifft einen Abgasturbolader für ein Kraftfahrzeug gemäß dem Oberbegriff des Anspruchs 1. Die Erfindung betrifft außerdem einen, mit einem derartigen Abgasturbolader ausgestatteten Verbrennungsmotor sowie ein, mit einem derartigen Verbrennungsmotor ausgestattetes Kraftfahrzeug.

Aus der DE 20 2005 009 491 U1 ist ein gattungsgemäßer Abgasturbolader bekannt, der in einem Turbinengehäuse zusätzlich eine Kartusche für eine variable Turbinengeometrie aufweist. Eine Welle des Abgasturboladers ist dabei in einem Lagergehäuse gelagert, das sich zwischen dem Turbinengehäuse und einem Verdichtergehäuse befindet. Zwischen der Kartusche und dem Lagergehäuse ist dabei eine Scheibenanordnung vorgesehen, die aus zumindest zwei Materiallagen mit einem dazwischenliegenden Luftspalt aufgebaut ist. Eine der Materiallagen ist dabei als konische Scheibe ausgebildet, während die andere Materiallage mit einem Knick versehen ist. Hierdurch soll sowohl die Funktion der Vorspannkrafterzeugung als auch eine Verbesserung einer Abschirmfunktion durch Erhöhung des Wärmewiderstandes geschaffen werden.

Aus der EP 1 905 653 A1 ist ein Hitzeschild zum Abschirmen eines Gegenstandes gegen Hitze und/oder Schall, insbesondere zur Abschirmung eines Katalysators, mit einer Ausnehmung bekannt, die durch den Hitzeschild mit Innen- und Oberfläche hindurchgeht. Die Ausnehmung kann dabei durch einen Verschluss zumindest bereichsweise in Abhängigkeit der Temperatur verschlossen werden, wobei sich der Verschluss in Abhängigkeit der Temperatur selbsttätig öffnet und schließt. Hierdurch soll einerseits ein schnelles Erwärmen des Katalysators auf dessen Betriebstemperatur erreicht und andererseits ein Überhitzen desselben vermieden werden.

Weitere Abgasturbolader sind beispielsweise aus der US 2007/0134106 A1, aus der WO 2006/046892 A1 sowie aus der US 3,692,436 bekannt.

Generell unterliegen üblicherweise sämtliche Bauteile eines Abgasturboladers während dessen Betrieb starken Temperaturschwankungen und bedingt durch die Verwendung unterschiedlicher Werkstoffe sowie unterschiedlicher Geometrien, unterschiedlich starken Ausdehnungen bzw. Dehnverhalten. Dabei müssen insbesondere Federeinrichtungen und Verbindungsmittel im heißgasbelasteten Bereich eines Abgasturboladers derart ausgebildet sein, dass sie auch unter den ungünstigsten anzutreffenden thermischen Bedingungen ihre Aufgabe zuverlässig erfüllen. Dies bedeutet bei Federeinrichtungen und Verbindungsmittel üblicherweise, dass diese hinsichtlich ihrer Abmessungen so dimensioniert werden müssen, dass sie ihre Feder-Nerbindungsaufgabe auch bei den höchsten zu erwartenden Temperaturen noch sicher bewältigen können, was üblicherweise zu einer sehr stark dimensionierten Auslegung der Verbindungsmittel bzw. entsprechender Fehlereinrichtungen führt.

Die vorliegende Erfindung beschäftigt sich mit dem Problem, für einen Abgasturbolader der gattungsgemäßen Art, eine verbesserte Ausführungsform anzugeben, die sich insbesondere durch eine bedarfsgerechte Dimensionierung von Federeinrichtungen im Hinblick auf eventuell auftretende Temperaturbelastungen auszeichnet.

Dieses Problem wird erfindungsgemäß durch die Gegenstände der unabhängigen Ansprüche gelöst. Vorteilhaften Ausführungsformen sind Gegenstand der abhängigen Ansprüche.

Die Erfindung beruht auf dem allgemeinen Gedanken, in einem Abgasturbolader eingesetzte Federeinrichtungen zur axialen Verspannung von Bauteilen derart auszubilden, dass diese temperaturunabhängig eine stets zumindest annähernd gleiche Federkraft erzeugen - mit anderen Worten ausgedrückt - dass die eingesetzten Federeinrichtungen die von ihnen erwartete Federkraft bei jeder zu erwartenden Temperatur bereitstellen können. Eine derartige Federeinrichtung kann beispielsweise eine Tellerfedereinrichtung sein, die zwischen einem Lagergehäuse und einem Turbinengehäuse des Abgasturboladers angeordnet ist und beide gegeneinander verspannt. Denkbar ist aber auch eine Federeinrichtung, insbesondere wieder eine Tellerfedereinrichtung, welche im Bereich einer Lageranordnung einer, ein Turbinenrad und ein Verdichterrad tragenden Welle, im Lagergehäuse angeordnet ist und dort beispielsweise die Aufgabe übernimmt, Lagerschalen axial gegeneinander zu verspannen. Durch eine derartig ausgebildete Federeinrichtung ist es möglich, trotz zeitlich variierender (wechselnder) thermischer Betriebsbedingungen verhältnismäßig gleichbleibende Kräfte zu erzeugen, so dass diese lediglich auf eine tatsächlich zu erzeugende Federkraft ausgelegt sein müssen und nicht wie bisher üblich, auf eine mindest zu erreichende Federkraft bei einer maximalen Arbeitstemperatur, was üblicherweise zu einer deutlich größeren Dimensionierung der Tellerfeder führt. Hierdurch ergeben sich eine Reihe von Vorteilen, wie beispielsweise die Möglichkeit zur Senkung des mittleren Axialkraftniveaus zur Verspannung von Bauteilen im Vergleich zu herkömmlichen Lösungen, die ein deutlich höheres Verspannniveau aufweisen müssen, um eine sichere kraftschlüssige Verbindung von Bauteilen bei wechselnden Temperaturen bzw. Betriebszuständen zu gewährleisten. Die erfindungsgemäß ausgebildeten Federeinrichtungen können somit verringerte Abmessungen (z.B. Durchmesser, Dicke) aufweisen und dadurch auch eine insbesondere kompaktere Bauform ermöglichen. Gegebenenfalls sind hierbei auch Reduzierungsmöglichkeiten der Abmessungen angrenzender bzw. durch die Federeinrichtung zu verspannender Bauteile möglich.

Zweckmäßig ist die wenigstens eine Federeinrichtung, insbesondere die Tellerfedereinrichtung, zwischen dem Lagergehäuse und dem Turbinengehäuse als Hitzeschild ausgebildet. Ein derartiger Hitzeschild bewirkt eine Abminderung des Wärmeübertrags und soll dadurch insbesondere temperaturempfindliche Bauteile vor einer zu starken Erhitzung schützen. Bei einer als Hitzeschild ausgebildeten Tellerfedereinrichtung sind somit zwei Funktionen durch ein gemeinsames Bauteil zu erfüllen, nämlich einerseits die Erzeugung einer Vorspannkraft und andererseits die Erzeugung eines Hitzeschutzschildes. Bei einer derartigen Ausführungsform kann ein bisher üblicher, zusätzlicher Hitzeschild entfallen, wodurch einerseits die Teilevielfalt und damit die Lager- und Logistikkosten und andererseits ein Montageaufwand gesenkt werden können. Zugleich lassen sich mit der erfindungsgemäßen Tellerfedereinrichtung auch Packagevorteile erzielen, da nunmehr nicht zwei separate Bauteile, nämlich eine Federeinrichtung und einen Hitzeschild, verbaut werden müssen, sondern lediglich ein einziges, beide Funktionen erfüllendes Bauteil.

Bei einer vorteilhaften Weiterbildung der erfindungsgemäßen Lösung, ist die wenigstens eine Tellerfedereinrichtung in der Art eines Bimetalls ausgebildet. Bimetalle sind üblicherweise Metallelemente aus zwei Schichten unterschiedlicher Materialien, die stoffschlüssig oder formschlüssig miteinander verbunden sind. Charakteristisch ist dabei die Veränderung der Form bei einer Änderung der Temperatur, welche sich üblicherweise als Verbiegung äußert. Ursache hierfür ist die unterschiedliche Wärmeausdehnung der verwendeten Metalle. Als für Bimetalle in Betracht kommende Metalle können beispielsweise Zink und Stahl oder auch Messing und Stahl erwähnt werden. Bimetalle arbeiten äußerst zuverlässig und sind darüber hinaus kostengünstig herzustellen, so dass eine in der Art eines Bimetalls ausgebildete Tellerfedereinrichtung bezüglich ihrer temperaturabhängigen Kraftänderungen so eingestellt werden kann, dass sie über den nahezu vollständig zu erwartenden Temperaturbereich, eine gleich hohe Federkraft erzeugt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Abgasturbolader,
- Fig. 2: eine Detaildarstellung im Bereich einer Tellerfedereinrichtung innerhalb des Abgasturboladers,
- Fig. 3: eine Detailschnittdarstellung durch die Tellerfedereinrichtung mit zwei miteinander verbundenen Einzeltellerfedern,
- Fig. 4: die einzelnen Tellerfedern der Tellerfedereinrichtung.

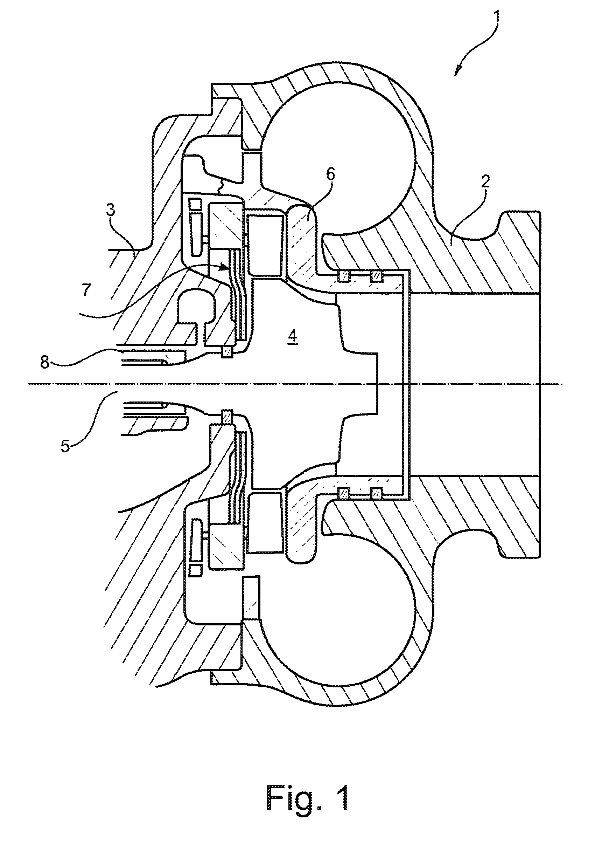

Entsprechend der Fig. 1, weist ein erfindungsgemäßer Abgasturbolader 1, von dem gemäß der Fig. 1 lediglich die Turbinenseite gezeigt ist, ein Turbinengehäuse 2 sowie ein sich daran anschließendes Lagergehäuse 3 auf. Das Lagergehäuse 3 ist dabei zwischen dem Turbinengehäuse 2 und einem nicht gezeigten Verdichtergehäuse angeordnet und dient zur Lagerung einer, ein Turbinenrad 4 und ein nicht gezeigtes Verdichterrad tragenden Welle 5. Das Turbinenrad 4 ist gemäß der Darstellung der Fig. 1 innerhalb eines Leitschaufelkäfigs 6 angeordnet, der beispielsweise eine variable Turbinengeometrie zur Beeinflussung eines Strömungsquerschnittes umgeben kann. Der Leitschaufelkäfig 6 befindet sich dabei im Wesentlichen zwischen dem Turbinengehäuse 2 und dem Lagergehäuse 3.

Erfindungsgemäß ist nun eine Federeinrichtung 7, insbesondere ein Tellerfedereinrichtung 7 vorgesehen, die temperaturunabhängig eine stets zumindest annähernd gleiche Federkraft erzeugt und somit eine bei vorzugsweise sämtlichen auftretenden Betriebstemperaturen annähernd konstante Federkraft bereitstellen kann. Die Tellerfedereinrichtung 7 ist dabei gemäß der Fig. 1 zwischen dem Lagergehäuse 3 und dem Leitschaufelkäfig 6 angeordnet. Somit stützt sich die Tellerfedereinrichtung 7 einerseits an dem Lagergehäuse 3 und andererseits indirekt über den Leitschaufelkäfig 6 am Turbinengehäuse 2 ab.

Bisher war es üblich, derartige Tellerfedereinrichtungen so zu dimensionieren, dass sie auch bei maximal zu erwartenden Temperaturbelastung eine Mindestfederkraft erzeugen können, was üblicherweise zu einer für den Normalfall Überdimensionierung der Tellerfedereinrichtung führte. Mit der erfindungsgemäßen Tellerfedereinrichtung 7, mit welcher nunmehr unabhängig von der Temperatur eine stets zumindest annähernd gleiche und definierte Federkraft erzeugt werden kann, ist es möglich, die Tellerfedereinrichtung 7 optimal auf die erforderliche Federkraft auszurichten und dadurch insbesondere schwächer auszulegen, wodurch sich auch Packagevorteile bieten. Mit der erfindungsgemäßen Tellerfedereinrichtung 7 ergibt sich somit die Möglichkeit zur Senkung des mittleren Axialkraftniveaus zur Verspannung von Bauteilen innerhalb des Abgasturboladers 1 im Vergleich zu herkömmlichen Lösungen, welche ein deutlich höheres Kraftniveau aufweisen müssen, um eine sichere kraftschlüssige Verbindung der Bauteile bei wechselnden Temperaturen bzw. Betriebszuständen gewährleisten zu können. Selbstverständlich soll dabei das gemäß der Fig. 1 gezeigte Einsatzgebiet der erfindungsgemäßen Tellerfedereinrichtung 7 rein exemplarisch verstanden werden, so dass diese beispielsweise auch im Bereich einer Lageranordnung 8 eingesetzt werden kann, um beispielsweise zwei in Axialrichtung gegeneinander zu verspannende Lagerschalen zu verspannen.

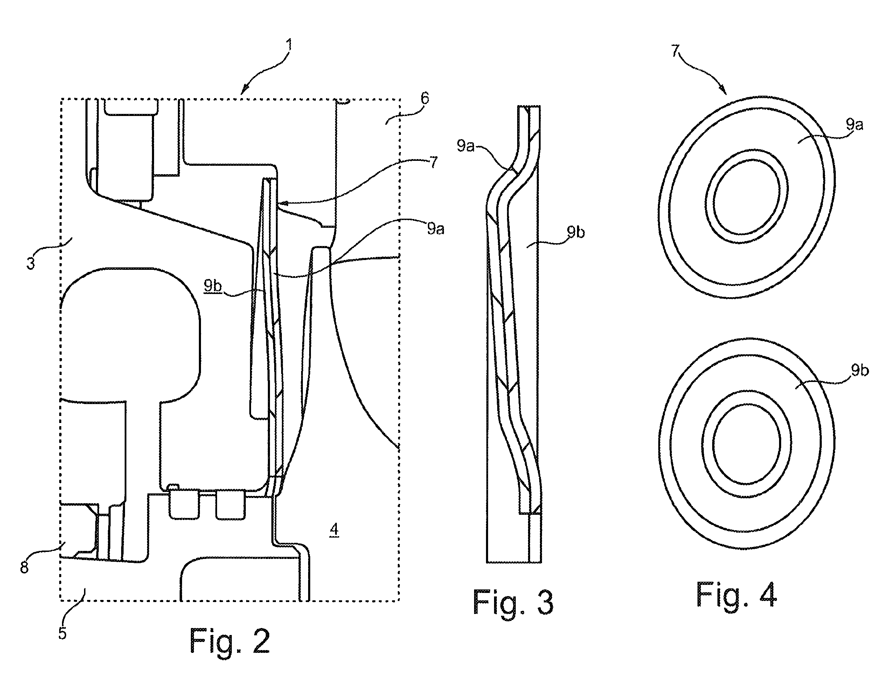

Denkbar ist hierbei auch, dass die Tellerfedereinrichtung 7 neben der Erzeugung einer konstanten Federkraft die Aufgabe eines Hitzeschildes übernimmt, wodurch ein besonders funktionales Bauelement geschaffen werden kann. Um die Anforderungen der temperaturunabhängigen Krafterzeugung erfüllen zu können, kann die Tellerfedereinrichtung 7 beispielsweise in der Art eines Bimetalls ausgebildet sein. Die beiden Metalle einer derart ausgebildeten Tellerfedereinrichtung 7 weisen dabei unterschiedliche Wärmeausdehnungskoeffizienten auf. Denkbar ist auch, dass die Tellerfedereinrichtung 7, wie dies besonders eindringlich in den Fig. 3 und 4 gezeigt ist, aus zumindest zwei einzelnen Tellerfedern 9a und 9b zusammengesetzt ist. Dabei weisen die beiden Tellerfedern 9a und 9b gemäß den Darstellungen in den Fig. 1 bis 4 eine gleichgroße Radialausstreckung auf, wobei auch denkbar ist, dass die wenigstens zwei Tellerfedern 9a und 9b eine unterschiedliche Radialerstreckung aufweisen. Selbstverständlich können dabei je Abgasturbolader 1 auch mehrere derartige, an die jeweiligen Anforderungen angepasste Tellerfedereinrichtungen 7, zum Einsatz gelangen. Insbesondere kann der Abgasturbolader 1 zur Ladedruckregelung einen regelbaren Bypass (Wastegate) und/oder eine variable Turbinengeometrie (VTG/VNT) aufweisen. Eingesetzt werden derartige Abgasturbolader üblicherweise in Verbrennungsmotoren von Kraftfahrzeugen.

Generell beruht die Erfindung auf dem allgemeinen Gedanken, die aufgrund der Temperatur hervorgerufenen Federkraftverluste der Tellerfedereinrichtung 7 durch eine geeignete Paarung einzelner bzw. mehrerer Tellerfedern 9a, 9b mit unterschiedlichen Wärmeausdehnungskoeffizienten zu kompensieren. Eine Verbindung der zumindest zwei Tellerfedern 9a und 9b kann beispielsweise durch eine Schweiß-, Niet- oder Formschlussverbindung erfolgen, wobei auch eine lose Stapelung zu Federpaketen mit randseitigem Formschluss vorstellbar ist.

Mit der erfindungsgemäßen (Teller-)federeinrichtung 7 können insbesondere bei einem Abgasturbolader 1 mit einer variablen Turbinengeometrien trotz komplizierter Belastungs- und Temperatursituationen eine Sicherstellung der Funktion, eine zuverlässige Hitzeabschirmung sowie nahezu konstante Federeigenschaften bewirkt werden. Ist der Abgasturbolader 1 beispielsweise als Wastegate-ATL ausgebildet, so stehen einerseits die Abschirmfunktion bei ungünstiger Temperaturbelastung und andererseits eine ausreichende Federkraft in allen Betriebspunkten, die insbesondere ein Verdrehen des Hitzeschildes im Betrieb sicher verhindern, im Vordergrund der Überlegungen.

## Patentansprüche

1. Abgasturbolader (1) für ein Kraftfahrzeug, mit
- einem Turbinengehäuse (2), einem Verdichtergehäuse und einem dazwischen angeordneten Lagergehäuse (3),
- einer, ein Turbinenrad (4) und ein Verdichterrad tragenden Welle (5), die über eine Lageranordnung (8) im Lagergehäuse (3) gelagert ist,
**dadurch gekennzeichnet,**
**dass** zumindest eine Tellerfedereinrichtung (7) vorgesehen ist, die aus wenigstens zwei einzelnen Tellerfedern (9a,9b) mit unterschiedlichen Wärmeausdehnungskoeffizienten zusammengesetzt ist, wobei durch die zumindest zwei Tellerfedern (9a,9b) die Tellerfedereinrichtung (7) eine bei sämtlichen auftretenden Betriebstemperaturen annähernd konstante Federkraft bereitstellt.

2. Abgasturbolader nach Anspruch 1,
**dadurch gekennzeichnet,**
**dass** die wenigstens eine Tellerfedereinrichtung (7) zwischen dem Lagergehäuse (3) und dem Turbinengehäuse (2) als Hitzeschild ausgebildet ist.

3. Abgasturbolader nach Anspruch 1 oder 2,
**dadurch gekennzeichnet,**
**dass** die wenigstens eine Tellerfedereinrichtung (7) in der Art eines Bimetalls ausgebildet ist.

4. Abgasturbolader nach einem der Ansprüche 1 bis 3,
**dadurch gekennzeichnet,**
**dass** die wenigstens zwei Tellerfedern (9a, 9b) dieselbe oder eine unterschiedliche Radialerstreckung aufweisen.

5. Abgasturbolader nach einem der Ansprüche 1 bis 4,
**dadurch gekennzeichnet,**
**dass** der Abgasturbolader (1) zur Ladedruckregelung einen regelbaren Bypass (Wastegate) und/oder eine variable Turbinengeometrie (VTG/VNT) aufweist.

6. Verbrennungsmotor mit einem Abgasturbolader (1) nach einem der Ansprüche 1 bis 5.

7. Kraftfahrzeug mit einem Verbrennungsmotor nach Anspruch 6.

## Claims

1. An exhaust gas turbocharger (1) for a motor vehicle, with
- a turbine housing (2), a compressor housing and a bearing housing (3) arranged in between,
- a shaft (5) carrying a turbine wheel (4) and a compressor wheel, which is mounted in the bearing housing (3) via a bearing arrangement (8),
**characterized in that**
at least one disc spring device (7) is provided, which is assembled from at least two individual disc springs (9a, 9b) with different heat expansion coefficients, wherein through the at least two disc springs (9a, 9b) the disc spring device (7) provides a spring force that is approximately constant in all operating temperatures that occur.

2. The exhaust gas turbocharger according to Claim 1,
**characterized in that**
the at least one disc spring device (7) between the bearing housing (3) and the turbine housing (2) is designed as heat shield.

3. The exhaust gas turbocharger according to Claim 1 or 2,
**characterized in that**
the at least one disc spring device (7) is designed in the manner of a bi-metal.

4. The exhaust gas turbocharger according to any one of the Claims 1 to 3,
**characterized in that**
the at least two disc springs (9a, 9b) have the same or a different radial tension.

5. The exhaust gas turbocharger according to any one of the Claims 1 to 4,
**characterized in that**
the exhaust gas turbocharger (1) for the charge pressure control comprises a controllable bypass (waste gate) and/or a variable turbine geometry (VTG/VNT).

6. A combustion engine with an exhaust gas turbocharger (1) according to any one of the Claims 1 to 5.

7. A motor vehicle with a combustion engine according to Claim 6.

## Revendications

1. Turbocompresseur (1) pour un véhicule automobile, comprenant
- un carter de turbine (2), un carter de compresseur et un carter de palier (3) intercalé,
- un arbre (5), portant une roue de turbine (4) et une roue de compresseur, lequel arbre est monté par un agencement de palier (8) dans le carter de palier (3),
**caractérisé**
**en ce qu'**au moins un dispositif de rondelle-ressort (7) est prévu, lequel comprend au moins deux rondelles-ressorts (9a, 9b) individuelles avec différents coefficients de dilatation thermique, le dispositif de rondelle-ressort (7) mettant à disposition une force de ressort approximativement constante à toutes les températures de service qui apparaissent grâce aux au moins deux rondelles-ressorts (9a, 9b).

2. Turbocompresseur selon la revendication 1,
**caractérisé**
**en ce que** le au moins dispositif de ressort-rondelle (7) est conçu entre le carter de palier (3) et le carter de turbine (2) comme bouclier thermique.

3. Turbocompresseur selon la revendication 1 ou 2,
**caractérisé**
**en ce que** le au moins un dispositif de ressort-rondelle (7) est conçu à la façon d'un bilame.

4. Turbocompresseur selon l'une des revendications 1 à 3,
**caractérisé**
**en ce que** les au moins deux ressorts-rondelles (9a, 9b) présentent la même ou une extension radiale différente.

5. Turbocompresseur selon l'une revendications 1 à 4,
**caractérisé**
**en ce que** le turbocompresseur (1) présente pour le réglage de la pression de suralimentation une déviation (Wastegate) réglable et/ou une géométrie de turbine variable (VTG/VNT).

6. Moteur à combustion comprenant un turbocompresseur à gaz d'échappement (1) selon l'une des revendications 1 à 5.

7. Véhicule comprenant un moteur à combustion selon la revendication 6.
